# FASCICULE DE BREVET EUROPEEN

(11) **EP 4 049 409 B1**
(45) Date de publication et mention de la délivrance du brevet: **26.11.2025**
(21) Numéro de dépôt: 20803215.1
(22) Date de dépôt: 13.10.2020
(51) Int. Cl.: H04L 9/32

(54) **TECHNIQUE DE COMMUNICATION ENTRE UNE APPLICATION METTANT EN OEUVRE UN SERVICE ET UN SERVEUR**
VERFAHREN ZUR KOMMUNIKATION ZWISCHEN EINER ANWENDUNG ZUR IMPLEMENTIERUNG EINES DIENSTES UND EINES SERVERS
TECHNIQUE FOR COMMUNICATION BETWEEN AN APPLICATION IMPLEMENTING A SERVICE AND A SERVER

(30) Priorité: 21.10.2019 FR 1911757
(43) Date de publication de la demande: 31.08.2022
(73) Titulaire: Orange, 92130 Issy-les-Moulineaux (FR)
(72) Inventeur: LE BRUN, Gilles, 92326 Châtillon Cedex (FR); BRAULT, Sébastien, 92326 Châtillon (FR); GALHAUT, Julien, 92326 Châtillon (FR); MALVILLE, Eric, 92326 Châtillon (FR)
(86) Numéro de dépôt international: PCT/FR2020/051804
(87) Numéro de publication internationale: WO 2021/079041

(56) Documents cités:
- US-A1- 2019 165 950
- US-B1- 9 912 486

## Description

L'invention se rapporte au domaine général des télécommunications.

L'invention concerne plus particulièrement une technique de communication entre un dispositif utilisateur, plus précisément une application mettant en œuvre un service, et un serveur. Elle trouve une application particulièrement intéressante dans le cadre du contrôle de conformité effectué par l'application pour établir une communication sécurisée avec le serveur.

Le protocole TLS (pour « *Transport Layer Security* ») est un protocole de sécurisation des échanges sur un réseau de communication étendu, tel que le réseau Internet. Ce protocole TLS permet d'établir un échange sécurisé (ou communication sécurisée) entre une application mettant en œuvre un service, également appelée application cliente, et un serveur. Afin d'authentifier le serveur, l'application cliente contrôle la conformité d'un certificat de clé publique de type X509 transmis par le serveur en le comparant à un certificat de référence associé au serveur. A cette fin, l'application cliente est configurée pour enregistrer ce certificat de référence. Ce contrôle de conformité du certificat est connu sous le nom de *« certificate pinning »* en anglais ou « épinglage de certificat ». Cette technique logicielle permet d'authentifier le serveur et d'éviter les attaques de type *« man in the middle ».*

Cependant, le certificat de référence associé au serveur doit être renouvelé régulièrement (par exemple tous les ans) pour des raisons de sécurité. Etant donné que le certificat de référence est enregistré lors de la configuration de l'application cliente, pour mettre à jour ce certificat de référence, il est nécessaire d'effectuer une mise à jour de l'ensemble des applications clientes, afin qu'elles disposent du certificat de référence mis à jour. Ceci est complexe à mettre en œuvre, en particulier en termes d'organisation et de déploiement synchronisé du certificat de référence mis à jour dans toutes les applications clientes.
La publication brevet document US9912486 B1 décrit un procédé permettant de mettre à jour le certificat d'un serveur, une fois une communication sécurisée établie avec ce même certificat.

Un des buts de l'invention est de remédier à des insuffisances/inconvénients de l'état de la technique et/ou d'y apporter des améliorations.

Selon un premier aspect, l'invention a pour objet un procédé de communication entre une application mettant en œuvre un service s'exécutant sur un dispositif utilisateur et un serveur principal. Ce procédé comprend pour l'application cliente :
- un contrôle de conformité d'un certificat de clé publique transmis par le serveur principal lors d'une tentative d'établissement d'une première communication sécurisée en fonction d'un certificat de référence pour ledit serveur principal, ledit contrôle de conformité conditionnant un établissement de communication sécurisée
- lorsque ledit certificat de clé publique transmis par le serveur principal n'est pas contrôlé conforme, un établissement d'une deuxième communication sécurisée avec un serveur de mise à jour avec contrôle de conformité d'un certificat de clé publique transmis par le serveur de mise à jour en fonction d'un certificat de référence pour ledit serveur de mise à jour ;
- une réception d'un certificat de référence mis à jour pour ledit serveur principal au moyen de la deuxième communication sécurisée, ledit certificat mis à jour étant destiné à être utilisé par l'application cliente lors d'un nouvel établissement de communication sécurisée avec le serveur principal.

La technique proposée permet ainsi de mettre à jour le certificat de clé publique de référence utilisé pour un contrôle de conformité d'un serveur, dit serveur principal, par une application mettant en œuvre un service, lors de l'établissement d'une communication sécurisée. Cette mise à jour s'effectue de manière transparente pour l'utilisateur de l'application. Il n'est pas nécessaire de télécharger de nouveau l'application afin de mettre à jour le certificat de référence. La technique proposée permet en effet de recevoir le certificat de référence pour le serveur principal au moyen d'une communication sécurisée établie avec un serveur de mise à jour. De plus, le déploiement du certificat de référence pour le serveur principal peut être effectué de manière asynchrone sur les différents dispositifs utilisateur exécutant l'application. Chacun de ces dispositifs utilisateur est mis à jour lors de la première tentative d'établissement de communication sécurisée après l'expiration de la validité du certificat de référence pour le serveur principal ou bien après un renouvellement du certificat de clé publique du serveur principal, par exemple en raison d'une corruption de ce certificat. Il est ici souligné que le terme « certificat de référence » est ici utilisé pour désigner le certificat de clé publique pour le serveur principal qui va être utilisé pour mettre en œuvre le contrôle de conformité au niveau de l'application cliente. Il est bien entendu que seul le serveur principal est la référence en ce qui concerne le certificat de clé publique à jour.

Le certificat de référence pour le serveur de mise à jour est dédié à la mise à jour du certificat de référence pour le serveur principal.

La technique proposée permet ainsi de mettre à jour rapidement le certificat de référence à utiliser pour mettre en œuvre un contrôle de conformité pour le serveur principal, lorsque le certificat de clé publique du serveur principal a expiré ou bien encore lorsque ce certificat a dû être renouvelé.

Les différents modes ou caractéristiques de réalisation mentionnés ci-après peuvent être ajoutés indépendamment ou en combinaison les uns avec les autres, au procédé de communication tel que défini précédemment.

Dans un mode de réalisation particulier, le procédé de communication comprend, lorsqu'une troisième communication sécurisée est établie avec le serveur principal, une réception d'un certificat référence mis à jour pour ledit serveur de mise à jour au moyen de la troisième communication sécurisée

Ainsi, on s'appuie sur la communication sécurisée établie entre le serveur principal et l'application mettant en œuvre le service pour mettre à jour le certificat de référence pour le serveur de mise à jour. Ceci permet de garantir que le certificat de référence pour le serveur de mise à jour sera lui-même à jour lorsque le certificat de référence pour le serveur devra être modifié. le certificat de référence pour le serveur de mise à jour peut être mis à jour rapidement, afin de permettre un contrôle de conformité pour le serveur de mise à jour, lorsque le certificat de clé publique du serveur de mise à jour a expiré ou bien encore lorsque ce certificat a dû être renouvelé.

Dans un mode de réalisation particulier, la date d'expiration du certificat de référence pour le serveur de mise à jour est postérieure à celle du certificat de référence pour le serveur principal.

Ceci permet de garantir que le certificat de référence pour le serveur de mise à jour sera valide lors de la mise à jour du certificat de référence pour le serveur principal.

Dans un mode de réalisation particulier, le procédé de communication comprend, lorsque le certificat de référence pour le serveur principal reçu est identique au certificat de référence utilisé lors du contrôle de conformité, une modification d'un réseau d'accès sous-jacent au réseau de communication pour tenter un nouvel établissement d'une communication sécurisée avec le serveur principal

Dans un mode de réalisation particulier, le procédé de communication comprend, lorsque la deuxième communication sécurisée ne peut pas être établie avec le serveur de mise à jour, une modification d'un réseau d'accès sous-jacent au réseau de communication pour tenter un nouvel établissement d'une communication sécurisée avec le serveur principal.

Ceci permet dans ces deux modes de réalisation d'écarter des cas d'erreur liés à un dysfonctionnement du réseau d'accès sous-jacent au réseau de communication.

Selon un deuxième aspect, l'invention concerne un dispositif utilisateur comprenant :
- un module de contrôle de conformité, agencé pour contrôler la conformité d'un certificat de clé publique transmis par un serveur lors d'une tentative d'établissement d'une communication sécurisée en fonction d'un certificat de référence pour ledit serveur, ledit contrôle de conformité conditionnant un établissement de communication sécurisée ;
- un module applicatif mettant en œuvre un service s'exécutant sur le dispositif utilisateur et un serveur principal, agencé pour :
   - commander un établissement d'une première communication sécurisée avec un serveur principal avec contrôle de conformité d'un certificat de clé publique transmis par le serveur principal en fonction d'un certificat de référence pour ledit serveur principal,
   - commander un établissement d'une deuxième communication sécurisée avec un serveur de mise à jour avec contrôle de conformité d'un certificat de clé publique transmis par le serveur de mise à jour en fonction d'un certificat de référence pour ledit serveur de mise à jour, lorsque ledit certificat de clé publique transmis par le serveur principal n'est pas contrôlé conforme, et
   - recevoir un certificat de référence mis à jour pour ledit serveur principal au moyen de la deuxième communication sécurisée, ledit certificat mis à jour étant destiné à être utilisé par l'application cliente lors d'un nouvel établissement de communication sécurisée avec le serveur principal.

Les avantages énoncés pour le procédé de communication selon le premier aspect sont transposables directement à un dispositif utilisateur.

Ce dispositif utilisateur peut bien entendu comporter en termes structurels les différentes caractéristiques relatives au procédé de communication tel que décrit précédemment, qui peuvent être combinées ou prises isolément.

Selon un troisième aspect, l'invention concerne un système. Ce système comprend un dispositif utilisateur selon le deuxième aspect et un serveur principal agencé pour mettre en œuvre un service avec le dispositif utilisateur, ledit système comprenant en outre un serveur de mise à jour, agencé pour envoyer un certificat de référence mis à jour pour le serveur principal au moyen d'une communication sécurisée établie avec contrôle de conformité, ledit certificat mis à jour étant destiné à être utilisé par l'application cliente lors d'un nouvel établissement de communication sécurisée avec le serveur principal.

Ce système peut bien entendu comporter en termes structurels les différentes caractéristiques relatives au procédé de communication tel que décrit précédemment, qui peuvent être combinées ou prises isolément.

Selon un quatrième aspect, l'invention concerne un programme pour un dispositif utilisateur, comprenant des instructions de code de programme destinées à commander l'exécution des étapes du procédé de communication précédemment décrit mises en œuvre par un dispositif utilisateur, lorsque ce programme est exécuté par ce dispositif et un support d'enregistrement lisible par un dispositif sur lequel est enregistré un programme pour un dispositif utilisateur.

Les avantages énoncés pour le procédé de communication selon le premier aspect sont transposables directement au programme pour un dispositif utilisateur et au support d'enregistrement.

La technique de communication entre une application mettant en œuvre un service s'exécutant sur un dispositif utilisateur et un serveur principal sera mieux comprise à l'aide de la description suivante de modes de réalisation particuliers, en référence aux dessins annexés sur lesquels :

la figure 1 représente un système dans lequel est mis en œuvre le procédé de communication dans un mode de réalisation particulier ;

la figure 2 illustre des étapes d'un procédé de communication selon un mode de réalisation particulier ;

la figure 3 représente un dispositif utilisateur dans un mode de réalisation particulier.

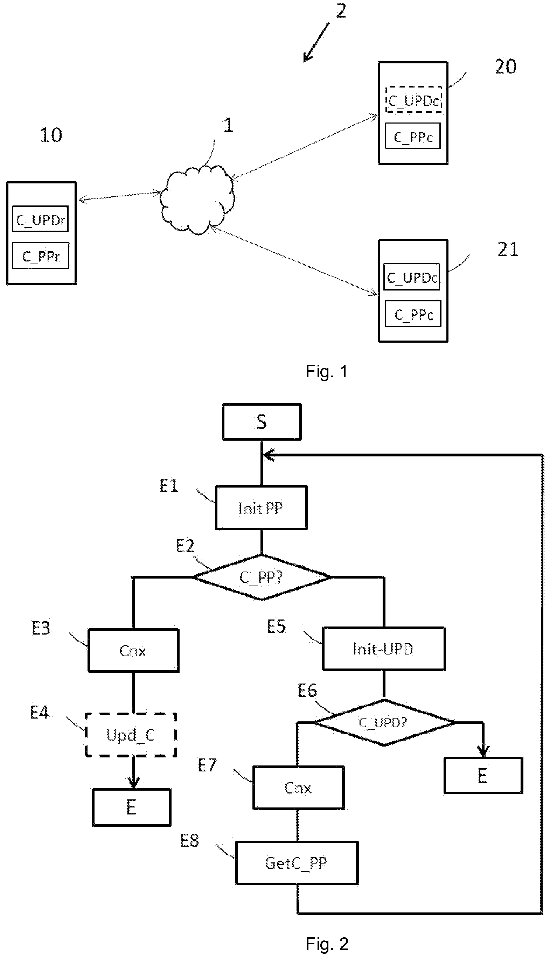

La **figure 1** représente un système 2 dans lequel est mis en œuvre le procédé de communication dans un mode de réalisation particulier. Ce système 2 comprend :
- un dispositif utilisateur 10, sur lequel s'exécute une application cliente mettant en œuvre un service ;
- un serveur 20, également appelé serveur principal, sur lequel s'exécute une application mettant en œuvre le service ;
- un serveur de mise à jour 21, apte à fournir à une application cliente un certificat de référence pour le serveur principal 20.

Le dispositif utilisateur 10 est par exemple un dispositif mobile, une tablette, un objet connecté, un élément de sécurité matériel tel qu'une carte SIM (pour *« Subscriber Identity Module* »)*,* une carte de type « eUICC » (pour *« embedded Universal Integrated Circuit Card* »)*,* également appelée « eSIM » (pour *« embedded Subscriber Identity Module* ») ou carte SIM inamovible, un eSE (pour *« embedded Secure Element »*), un élément de sécurité logiciel, par exemple une carte hébergée émulée sur un serveur localisé dans le réseau d'un opérateur,...

Le dispositif utilisateur 10 communique avec les serveurs, principal 20 et de mise à jour 21, par l'intermédiaire d'un réseau de communication 1, par exemple un réseau de communication étendu tel que le réseau Internet. Ce réseau de communication 1 s'appuie sur un réseau d'accès sous-jacent, non représenté sur la figure 1, tel qu'un réseau d'accès mobile.

Un certificat de clé publique C_PPc de type X.509 a été obtenu par le serveur principal 20 auprès d'une autorité de certification, non représentée sur la figure 1.

Un certificat de clé publique tel que défini par la norme X.509 comprend notamment :
- des informations sur la clé publique : un algorithme de clé publique et la clé publique correspondant à une clé secrète dont dispose le détenteur du certificat ;
- des informations sur la validité du certificat (date de début, date d'expiration) ;
- une signature du certificat effectuée par une autorité de certification.

Par la suite le protocole TLS (pour *« Transport Layer Security* ») est utilisé pour établir un échange sécurisé (ou communication sécurisée) entre une application mettant en œuvre un service, également appelée application cliente, et un serveur. Afin d'authentifier le serveur, l'application cliente contrôle la conformité d'un certificat de type X509 transmis par le serveur en le comparant à un certificat de référence associé au serveur. A cette fin, l'application cliente est configurée pour enregistrer ce certificat de référence. Ce contrôle de conformité du certificat est connu sous le nom de *« certificate pinning »* en anglais ou « épinglage de certificat ».

On se place par la suite dans un mode de réalisation où pour établir une communication sécurisée avec le serveur principal 20, l'application cliente effectue un contrôle de conformité du certificat de clé publique C_PPc transmis par ce serveur principal 20. A cet effet, l'application cliente et un certificat de référence C_PPr pour le serveur principal 20 sont enregistrés dans une zone mémoire du dispositif utilisateur 10. Pour effectuer le contrôle de conformité, l'application cliente compare le certificat de clé publique C_PPc transmis par le serveur principal 20 avec le certificat de référence C_PPr enregistré pour ce même serveur principal 20. Lorsque le résultat de la comparaison est négatif, l'établissement de la communication sécurisée entre l'application cliente et le serveur principal s'arrête. L'application cliente ne peut pas s'exécuter en collaboration avec l'application mettant en œuvre le service s'exécutant sur le serveur principal 20. Ce résultat négatif peut être dû à une mise à jour du certificat de clé publique du serveur principal, liée par exemple à une expiration de ce certificat ou bien encore à un renouvellement du certificat de clé publique du serveur principal par exemple en raison d'une corruption de ce certificat. Aucune limitation n'est attachée aux raisons qui ont entraîné la mise à jour du certificat. Lorsque le résultat de la comparaison est positif, le certificat de clé publique C_PPc transmis par le serveur principal 20 étant contrôlé conforme avec le certificat de référence C_PPr enregistré pour ce même serveur principal 20, la communication sécurisée entre l'application cliente et l'application correspondante sur le serveur principal est établie et l'application cliente peut exécuter le service en collaboration avec le serveur principal 20. Le contrôle de conformité conditionne un établissement de communication sécurisée entre l'application cliente et le serveur principal 20.

Un certificat de clé publique C_UPDc de type X.509 a été obtenu par le serveur de mise à jour 21 auprès d'une autorité de certification, non représentée sur la figure 1.

Dans le mode de réalisation décrit, le certificat de référence C_UPDc pour le serveur de mise à jour 21 (étant appelé par la suite C_UPDr) est également enregistré, avec l'application cliente et le certificat de référence C_PPr pour le serveur principal 20, dans une zone mémoire du dispositif utilisateur 10. Ce certificat de référence C_UPDr est destiné à être utilisé pour contrôler la conformité du serveur de mise à jour 21 lors de l'établissement d'une communication sécurisée entre l'application cliente et le serveur de mise à jour 21. Comme décrit précédemment en relation avec le serveur principal 20, le contrôle de conformité conditionne un établissement de communication sécurisée entre l'application cliente et le serveur de mise à jour 21.

Dans un mode de réalisation particulier, la date d'expiration du certificat de référence C_UPDr pour le serveur de mise à jour 21 est postérieure à celle du certificat de référence C_PPr pour le serveur principal 20.

Le serveur de mise à jour 21 mémorise également le certificat de clé publique C_PPc pour le serveur principal 20 dans une zone mémoire. Ce certificat de clé publique C_PPc est destiné à être transmis par le serveur de mise à jour 21 à l'application cliente, une fois une communication sécurisée établie avec contrôle de conformité entre l'application cliente et le serveur de mise à jour 21. Lorsque le certificat de clé publique C_PPc est mis à jour, par exemple en raison d'une expiration ou bien d'un renouvellement, celui-ci est enregistré sur les deux serveurs, le serveur principal 20 et le serveur de mise à jour 21, afin que le serveur de mise à jour 21 soit toujours apte à transmettre le certificat de clé publique C_PPc à jour (ce dernier devenant alors C_PPr pour l'application cliente).

Dans un mode de réalisation particulier, le serveur principal 20 est également apte à fournir à l'application cliente un certificat de référence pour le serveur de mise à jour 21. Ce certificat de clé publique C_UPDc pour le serveur de mise à jour 21 est destiné à être transmis par le serveur principal 20 à l'application cliente, une fois une communication sécurisée établie avec contrôle de conformité entre l'application cliente et le serveur principal 20.

Le procédé de communication entre une application mettant en œuvre un service s'exécutant sur un dispositif utilisateur 10 et un serveur principal 20, plus précisément l'application s'exécutant sur le serveur principal, va maintenant être décrit en relation avec la **figure 2** dans un système 2 tel que représenté à la figure 1.

Dans une étape E1, l'application mettant en œuvre le service s'exécutant sur le dispositif utilisateur 10, appelée par la suite application cliente, initialise l'établissement d'une communication sécurisée avec le serveur principal 20 au moyen du protocole TLS. Cette étape E1 n'est pas plus décrite, étant connue de l'homme du métier. Au cours de cette étape E1 de tentative d'établissement d'une communication sécurisée, le serveur principal 20 transmet à l'application cliente un certificat de clé publique C_PPc.

Dans une étape E2, un contrôle de conformité du certificat de clé publique C_PPc transmis par le serveur principal est effectué en comparant celui-ci avec un certificat de référence C_PPr pour ce serveur principal 20, enregistré avec l'application cliente. Le contrôle de conformité conditionne un établissement de communication sécurisée.

Lorsque le certificat de clé publique C_PPc transmis par le serveur principal est contrôlé conforme à l'étape E2, dans une étape E3, la communication sécurisée est établie et le service peut être exécuté.

Lorsque le certificat de clé publique C_PPc transmis par le serveur principal n'est pas contrôlé conforme à l'étape E2, l'application cliente initie un établissement d'une deuxième communication sécurisée avec le serveur de mise à jour 21 dans une étape E5. Pour établir cette deuxième communication sécurisée, dans une étape E6, un contrôle de conformité d'un certificat de clé publique C_UPDc transmis par le serveur de mise à jour 21 est effectué par l'application cliente en comparant ce certificat avec un certificat de référence C_UPDr pour ce serveur de mise à jour.

Lorsque le certificat de clé publique C_UPDc transmis par le serveur de mise à jour est contrôlé conforme à l'étape E6, dans une étape E7, la communication sécurisée est établie.

Dans une étape E8, l'application cliente reçoit un certificat de clé publique C_PPc mis à jour pour le serveur principal 20 au moyen de la communication sécurisée qui a été établie. Ce certificat de clé publique mis à jour est enregistré en tant que certificat de référence C_PPr pour le serveur principal 20 dans la zone mémoire. Le certificat de référence est destiné à être utilisé par l'application cliente lors d'un nouvel établissement de communication sécurisée avec le serveur principal. Le procédé se poursuit en mettant en œuvre de nouveau l'étape E1 pour établir une communication sécurisée entre l'application cliente et le serveur principal 20. Si l'application cliente réussit à établir une communication sécurisée avec le serveur principal avec un contrôle de conformité utilisant le nouveau certificat de référence, alors la mise à jour du certificat principal de référence est confirmée pour l'application cliente. Ainsi il est possible de mettre à jour le certificat de clé publique du serveur principal de manière décentralisée et asynchrone. Ceci permet de réagir plus rapidement à des situations dans lesquelles le certificat de clé publique du serveur principal doit être modifié.

Lorsque le certificat de clé publique C_UPDc transmis par le serveur de mise à jour n'est pas contrôlé conforme à l'étape E6, le procédé se termine. L'application cliente doit alors être mise à jour en fonction du certificat de clé publique associé au serveur principal, par exemple par téléchargement d'une nouvelle version de l'application cliente.

Dans un mode de réalisation particulier, dans une étape E4, le certificat de clé publique C_UPDc du serveur de mise à jour est envoyé par le serveur principal au moyen de la communication sécurisée établie, par exemple suite à l'étape E3 décrite précédemment. Ce certificat est alors enregistré dans une zone mémoire en tant que certificat de référence C_UPDr pour le serveur de mise à jour 21. Ceci permet de garantir que le certificat de référence C_PPr pour le serveur principal 20 pourra être mis à jour comme décrit précédemment, la communication sécurisée avec le serveur de mise à jour pouvant être établie.

Cet envoi du certificat de clé publique C_UPDc du serveur de mise à jour peut être effectué à intervalles de temps réguliers ou lorsque cela est nécessaire. Cet envoi peut également être effectué sur requête de l'application cliente ou bien de manière non sollicitée.

Dans un mode de réalisation particulier, cette mise à jour du certificat de clé publique C_UPDc du serveur de mise à jour est anticipée en indiquant une date de début pour le certificat postérieure à la date d'envoi. Ceci permet d'anticiper la mise à jour du certificat de clé publique pour le serveur de mise à jour 21.

Il est ici rappelé que pour la mise en œuvre du procédé, lors de la mise à jour du certificat de clé publique pour le serveur de mise à jour à l'étape E4, la date d'expiration du certificat de clé publique pour le serveur de mise à jour doit être postérieure à la date d'expiration du certificat de clé publique pour le serveur principal.

Dans un mode de réalisation particulier, lorsque le certificat de clé publique C_UPDc transmis par le serveur de mise à jour n'est pas contrôlé conforme à l'étape E6, un compteur est incrémenté à chaque nouvelle tentative échouée. Ce compteur est remis à zéro lorsque la mise à jour du certificat principal de référence est confirmée pour l'application cliente. Une temporisation est également déclenchée lors de la première occurrence d'une non-conformité du certificat de clé publique pour le serveur de mise à jour. Lorsque le compteur dépasse une valeur seuil ou que la temporisation expire sans que le certificat de clé publique pour le serveur principal n'ait pu être mis à jour, le procédé se termine. L'application cliente doit alors être mise à jour en fonction du certificat de clé publique associé au serveur principal, par exemple par téléchargement d'une nouvelle version de l'application cliente. Ainsi les tentatives avortées de mise à jour du certificat de clé publique pour le serveur principal dans l'application cliente sont limitées en nombre et dans le temps.

Dans un mode de réalisation particulier, lors de l'étape E8 de réception d'un certificat de de clé publique mis à jour pour le serveur principal au moyen de la communication sécurisée, l'application cliente vérifie si le certificat de clé publique C_PPc reçu est inchangé. Dans ce cas, la mise à jour a échoué et le procédé se termine.

Dans un mode de réalisation particulier, si le serveur de mise à jour n'est pas joignable, il n'est pas possible de réaliser la mise à jour et le procédé se termine.

Différents cas où il n'est pas possible de mettre à jour le certificat de référence pour le serveur principal sont décrits précédemment, par exemple lorsque le certificat de référence reçu pour le serveur principal est identique au certificat de référence utilisé lors du contrôle de conformité qui a échoué ou bien encore lorsque la deuxième communication sécurisée ne peut pas être établie avec le serveur de mise à jour. Pour ces différents cas, au lieu de revenir à un téléchargement complet de l'application comme décrit précédemment, dans un mode de réalisation particulier, l'application cliente commande une modification d'un réseau d'accès sous-jacent au réseau de communication pour tenter un nouvel établissement d'une communication sécurisée avec le serveur principal. Le certificat de référence pour le serveur principal reste inchangé. Cette commande de modification peut être déclenchée par l'utilisateur suite à une demande vers l'utilisateur au moyen de l'interface homme-machine lui demandant de se connecter au moyen d'un autre réseau d'accès.

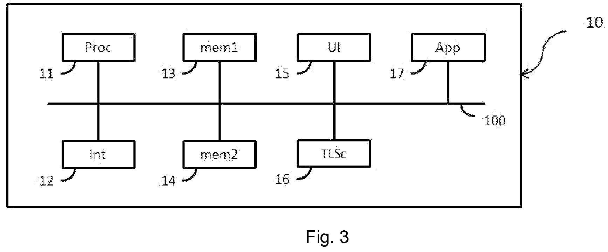

La **figure 3** illustre de manière schématique un dispositif utilisateur 10 dans un mode de réalisation particulier. Le dispositif utilisateur 10 comprend notamment :
- un processeur matériel 11 pour exécuter des instructions de code de modules logiciels ;
- une zone mémoire 13, configurée pour mémoriser un programme qui comprend des instructions de code pour mettre en œuvre des étapes du procédé de communication entre une application mettant en œuvre un service et un serveur ;
- une mémoire de stockage 14, configurée pour stocker des données utilisées lors de la mise en œuvre du procédé de communication entre une application mettant en œuvre un service et un serveur, telles que des paramètres utilisés pour des calculs effectués par le processeur 11, des données intermédiaires de calculs effectués par le processeur 11, etc ;
- une interface de réseau 12 ;
- une interface homme-machine 15 ;
- un module de contrôle de conformité 16, agencé pour contrôler la conformité d'un certificat de clé publique transmis par un serveur lors d'une tentative d'établissement d'une communication sécurisée en fonction d'un certificat de référence pour ledit serveur, ledit contrôle de conformité conditionnant un établissement de communication sécurisée ;
- un module applicatif 17 mettant en œuvre un service s'exécutant sur le dispositif utilisateur et un serveur principal 20 ;
qui sont connectés entre eux au travers d'un bus 100.

Bien entendu, les éléments constitutifs du dispositif utilisateur peuvent être connectés au moyen d'une connexion autre qu'un bus.

Le processeur 11 commande les opérations du dispositif utilisateur. La zone mémoire 13 stocke au moins un code de programme d'ordinateur qui lorsqu'il est exécuté par le processeur 11 met en œuvre les différentes fonctions du module applicatif. Le processeur 11 peut être formé par tout matériel ou logiciel connu et approprié, ou par une combinaison de matériel et de logiciel. Par exemple, le processeur 11 peut être formé par un matériel dédié tel qu'un circuit de traitement, ou par une unité de traitement programmable telle qu'une unité centrale de traitement (*Central Processing Unit*) qui exécute un programme stocké dans une mémoire de celui-ci.

La zone mémoire 13 peut être formée par n'importe quel moyen approprié capable de stocker le programme d'une manière lisible par un ordinateur. Des exemples de zone mémoire 13 comprennent des supports de stockage non transitoires lisibles par ordinateur tels que des dispositifs de mémoire à semi-conducteurs, et des supports d'enregistrement magnétiques, optiques ou magnéto-optiques chargés dans une unité de lecture et d'écriture. Le programme amène le processeur 11 à exécuter un procédé de communication entre une application mettant en œuvre un service et un serveur selon un mode de réalisation particulier.

Une interface réseau 12 fournit une connexion entre le dispositif utilisateur 10 et un serveur par l'intermédiaire d'un réseau de communication s'appuyant sur un réseau d'accès sous-jacent. L'interface réseau 12 peut fournir, en fonction de sa nature, une connexion filaire ou sans fil.

Le module applicatif 17 est en outre agencé pour :
- commander au module de contrôle de conformité 16 un établissement d'une première communication sécurisée avec un serveur principal avec contrôle de conformité d'un certificat de clé publique transmis par le serveur principal en fonction d'un certificat de référence pour ledit serveur principal,
- commander au module de contrôle de conformité 16 un établissement d'une deuxième communication sécurisée avec un serveur de mise à jour avec contrôle de conformité d'un certificat de clé publique transmis par le serveur de mise à jour en fonction d'un certificat de référence pour ledit serveur de mise à jour, lorsque ledit certificat de clé publique transmis par le serveur principal n'est pas contrôlé conforme, et
- recevoir un certificat de référence mis à jour pour ledit serveur principal au moyen de la deuxième communication sécurisée, ledit certificat mis à jour étant destiné à être utilisé par l'application cliente lors d'un nouvel établissement de communication sécurisée avec le serveur principal.

Dans un mode de réalisation particulier, le module applicatif 17 est en outre agencé pour recevoir un certificat référence mis à jour pour le serveur de mise à jour 21 au moyen d'une communication sécurisée établie avec le serveur principal.

Dans un mode de réalisation particulier, le module applicatif 17 est en outre agencé pour commander une modification d'un réseau d'accès sous-jacent au réseau de communication pour tenter un nouvel établissement d'une communication sécurisée avec le serveur principal, lorsque le certificat de référence pour le serveur principal reçu est identique au certificat de référence utilisé lors du contrôle de conformité.

Dans un mode de réalisation particulier, le module applicatif 17 est en outre agencé pour commander une modification d'un réseau d'accès sous-jacent au réseau de communication pour tenter un nouvel établissement d'une communication sécurisée avec le serveur principal, lorsque la deuxième communication sécurisée ne peut pas être établie avec le serveur de mise à jour.

Dans ces deux modes de réalisation, le module applicatif 17 peut être en outre agencé pour demander à l'utilisateur de se connecter au moyen d'un autre réseau d'accès au moyen de l'interface homme-machine 15.

Il est ici souligné que le dispositif utilisateur 10 comprend également d'autres modules de traitement, non représentés sur la figure 3, configurés pour mettre en œuvre les différentes fonctions de ce dispositif.

De plus, le serveur principal 20 comprend notamment :
- un processeur matériel pour exécuter des instructions de code de modules logiciels ;
- une zone mémoire, configurée pour mémoriser un programme qui comprend des instructions de code pour mettre en œuvre des étapes du procédé de communication entre une application mettant en œuvre un service sur un dispositif utilisateur et le serveur principal ;
- une mémoire de stockage, configurée pour stocker des données utilisées lors de la mise en œuvre du procédé de communication entre une application mettant en œuvre un service et le serveur principal, telles que des paramètres utilisés pour des calculs effectués par le processeur, des données intermédiaires de calculs effectués par le processeur, etc ;
- une interface de réseau ;
- un module d'établissement d'une communication sécurisée avec contrôle de conformité, agencé pour transmettre à un dispositif utilisateur un certificat de clé publique lors d'une tentative d'établissement d'une communication sécurisée, ledit contrôle de conformité conditionnant un établissement de communication sécurisée ;
- un module applicatif mettant en œuvre un service s'exécutant sur le serveur principal 20 et le dispositif utilisateur;
qui sont connectés entre eux au travers d'un bus.

Dans un mode de réalisation particulier, le module applicatif du serveur principal est en outre agencé pour transmettre un certificat de référence pour le serveur de mise à jour 21, une fois une communication sécurisée établie avec contrôle de conformité.

Il est ici souligné que le serveur principal 20 comprend également d'autres modules de traitement, configurés pour mettre en œuvre les différentes fonctions de ce serveur.

Le serveur de mise à jour 21 comprend notamment :
- un processeur matériel pour exécuter des instructions de code de modules logiciels ;
- une zone mémoire, configurée pour mémoriser un programme qui comprend des instructions de code pour mettre en œuvre des étapes du procédé de communication entre une application mettant en œuvre un service sur un dispositif utilisateur et le serveur de mise à jour ;
- une mémoire de stockage, configurée pour stocker des données utilisées lors de la mise en œuvre du procédé de communication entre une application mettant en œuvre un service et le serveur de mise à jour, telles que des paramètres utilisés pour des calculs effectués par le processeur, des données intermédiaires de calculs effectués par le processeur, etc ;
- une interface de réseau ;
- un module d'établissement d'une communication sécurisée avec contrôle de conformité, agencé pour transmettre à un dispositif utilisateur un certificat de clé publique lors d'une tentative d'établissement d'une communication sécurisée, ledit contrôle de conformité conditionnant un établissement de communication sécurisée ;
- un module applicatif mettant en œuvre un service s'exécutant sur le serveur de mise à jour 21 et le dispositif utilisateur, agencé pour transmettre un certificat de référence mis à jour pour le serveur principal ;
qui sont connectés entre eux au travers d'un bus.

Il est ici souligné que le serveur de mise à jour comprend également d'autres modules de traitement, configurés pour mettre en œuvre les différentes fonctions de ce serveur.

La technique communication entre une application mettant en œuvre un service et un serveur est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en œuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, le dispositif utilisateur 10 est configuré pour mettre en œuvre des étapes du procédé de communication entre une application mettant en œuvre un service et un serveur précédemment décrit, mises en œuvre par un dispositif utilisateur. Il s'agit de préférence de modules logiciels comprenant des instructions logicielles pour faire exécuter les étapes (ou des actions) du procédé de communication précédemment décrit, mises en œuvre par un dispositif utilisateur. L'invention concerne donc aussi :
- un programme pour un dispositif utilisateur, comprenant des instructions de code de programme destinées à commander l'exécution des étapes (ou des actions) du procédé de communication précédemment décrit, lorsque ledit programme est exécuté par ce dispositif ;
- un support d'enregistrement lisible par un dispositif utilisateur sur lequel est enregistré le programme pour un dispositif.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

L'invention concerne donc aussi un dispositif utilisateur configuré pour établir une communication entre une application mettant en œuvre un service s'exécutant sur un dispositif utilisateur 10 et un serveur principal 20, ce dispositif utilisateur comprenant un processeur configuré pour :
- contrôler une conformité d'un certificat de clé publique transmis par le serveur principal lors d'une tentative d'établissement d'une première communication sécurisée en fonction d'un certificat de référence pour ledit serveur principal, ledit contrôle de conformité conditionnant un établissement de communication sécurisée ;
- établir une deuxième communication sécurisée avec un serveur de mise à jour 21 avec contrôle de conformité d'un certificat de clé publique transmis par le serveur de mise à jour en fonction d'un certificat de référence pour ledit serveur de mise à jour, lorsque ledit certificat de clé publique transmis par le serveur principal n'est pas contrôlé conforme ;
- recevoir un certificat de référence mis à jour pour ledit serveur principal au moyen de la deuxième communication sécurisée, ledit certificat mis à jour étant destiné à être utilisé par l'application cliente lors d'un nouvel établissement de communication sécurisée avec le serveur principal.

L'invention concerne également un système 2 comprenant un dispositif utilisateur 10 tel que décrit précédemment, un serveur principal 20 agencé pour mettre en œuvre un service avec le dispositif utilisateur et un serveur de mise à jour 21, agencé pour envoyer un certificat de référence mis à jour pour le serveur principal au moyen d'une communication sécurisée établie avec contrôle de conformité, ledit certificat mis à jour étant destiné à être utilisé par l'application cliente lors d'un nouvel établissement de communication sécurisée avec le serveur principal.

L'invention concerne aussi un serveur principal configuré pour établir une communication entre une application mettant en œuvre un service s'exécutant sur un dispositif utilisateur 10 et ce serveur principal, ce serveur principal comprenant un processeur configuré pour transmettre un certificat de clé publique à un dispositif utilisateur pour un contrôle de conformité lors d'une tentative d'établissement d'une communication sécurisée, ledit contrôle de conformité conditionnant un établissement de communication sécurisée.

Dans un mode de réalisation particulier, le processeur du serveur principal 20 est en outre configuré pour envoyer un certificat de référence mis à jour pour le serveur de mise à jour 21 au moyen d'une communication sécurisée établie avec contrôle de conformité.

L'invention concerne donc aussi un serveur de mise à jour configuré pour établir une communication entre une application mettant en œuvre un service s'exécutant sur un dispositif utilisateur 10 et ce serveur de mise à jour, ce serveur de mise à jour comprenant un processeur configuré pour :
- transmettre un certificat de clé publique à un dispositif utilisateur pour un contrôle de conformité lors d'une tentative d'établissement d'une communication sécurisée, ledit contrôle de conformité conditionnant un établissement de communication sécurisée ;
- transmettre un certificat de référence mis à jour pour le serveur principal au moyen de la communication sécurisée, ce certificat mis à jour étant destiné à être utilisé par l'application cliente lors d'un nouvel établissement de communication sécurisée avec le serveur principal.

## Revendications

1. Procédé de communication entre une application cliente mettant en œuvre un service s'exécutant sur un dispositif utilisateur (10) et un serveur principal (20), ledit procédé comprenant pour l'application cliente :
- un contrôle de conformité (E2) d'un certificat de clé publique transmis par le serveur principal lors d'une tentative d'établissement (E1) d'une première communication sécurisée en fonction d'un certificat de référence pour ledit serveur principal, ledit contrôle de conformité conditionnant un établissement de communication sécurisée ;
- lorsque ledit certificat de clé publique transmis par le serveur principal n'est pas contrôlé conforme, un établissement (E5) d'une deuxième communication sécurisée avec un serveur de mise à jour (21) avec contrôle de conformité (E6) d'un certificat de clé publique transmis par le serveur de mise à jour en fonction d'un certificat de référence pour ledit serveur de mise à jour ;
- une réception (E8) d'un certificat de référence mis à jour pour ledit serveur principal au moyen de la deuxième communication sécurisée, ledit certificat mis à jour étant destiné à être utilisé par l'application cliente lors d'un nouvel établissement de communication sécurisée avec le serveur principal.

2. Procédé selon la revendication 1, comprenant, lorsqu'une troisième communication sécurisée est établie avec le serveur principal, une réception d'un certificat référence mis à jour pour ledit serveur de mise à jour au moyen de la troisième communication sécurisée.

3. Procédé selon la revendication 1, dans lequel la date d'expiration du certificat de référence pour le serveur de mise à jour est postérieure à celle du certificat de référence pour le serveur principal.

4. Procédé selon la revendication 1, comprenant lorsque le certificat de référence pour le serveur principal reçu est identique au certificat de référence utilisé lors du contrôle de conformité, une modification d'un réseau d'accès sous-jacent au réseau de communication pour tenter un nouvel établissement d'une communication sécurisée avec le serveur principal.

5. Procédé selon la revendication 1, comprenant lorsque la deuxième communication sécurisée ne peut pas être établie avec le serveur de mise à jour, une modification d'un réseau d'accès sous-jacent au réseau de communication pour tenter un nouvel établissement d'une communication sécurisée avec le serveur principal.

6. Dispositif utilisateur (10) exécutant une application cliente comprenant :
- un module de contrôle de conformité (16), agencé pour contrôler la conformité d'un certificat de clé publique transmis par un serveur lors d'une tentative d'établissement d'une communication sécurisée en fonction d'un certificat de référence pour ledit serveur, ledit contrôle de conformité conditionnant un établissement de communication sécurisée ;
- un module applicatif (17) mettant en œuvre un service s'exécutant sur le dispositif utilisateur et un serveur principal (20), agencé pour :
- commander un établissement d'une première communication sécurisée avec un serveur principal avec contrôle de conformité d'un certificat de clé publique transmis par le serveur principal en fonction d'un certificat de référence pour ledit serveur principal,
- commander un établissement d'une deuxième communication sécurisée avec un serveur de mise à jour avec contrôle de conformité d'un certificat de clé publique transmis par le serveur de mise à jour en fonction d'un certificat de référence pour ledit serveur de mise à jour, lorsque ledit certificat de clé publique transmis par le serveur principal n'est pas contrôlé conforme, et
- recevoir un certificat de référence mis à jour pour ledit serveur principal au moyen de la deuxième communication sécurisée, ledit certificat mis à jour étant destiné à être utilisé par l'application cliente lors d'un nouvel établissement de communication sécurisée avec le serveur principal.

7. Système (2) comprenant un dispositif utilisateur (10) selon la revendication 6 et un serveur principal (20) agencé pour mettre en œuvre un service avec le dispositif utilisateur, ledit système comprenant en outre un serveur de mise à jour (21), agencé pour envoyer un certificat de référence mis à jour pour le serveur principal au moyen d'une communication sécurisée établie avec contrôle de conformité, ledit certificat mis à jour étant destiné à être utilisé par l'application cliente lors d'un nouvel établissement de communication sécurisée avec le serveur principal.

8. Programme pour un dispositif utilisateur, comprenant des instructions de code de programme destinées à commander l'exécution des étapes du procédé de communication selon l'une des revendications 1 à 5 mises en œuvre par le dispositif utilisateur, lorsque ledit programme est exécuté par ledit dispositif.

9. Support d'enregistrement lisible par un dispositif utilisateur sur lequel est enregistré le programme selon la revendication 8.

## Patentansprüche

1. Verfahren zur Kommunikation zwischen einer Client-Anwendung, die einen Dienst implementiert, der auf einem Benutzergerät (10) ausgeführt wird, und einem Hauptserver (20), wobei das Verfahren für die Client-Anwendung umfasst:
- eine Konformitätsprüfung (E2) eines vom Hauptserver übertragenen Public-Key-Zertifikats bei einem Versuch des Aufbaus (E1) einer ersten sicheren Kommunikation in Abhängigkeit von einem Referenzzertifikat für den Hauptserver, wobei die Konformitätsprüfung Voraussetzung für einen Aufbau einer sicheren Kommunikation ist;
- wenn die Prüfung ergibt, dass das vom Hauptserver übertragene Public-Key-Zertifikat nicht konform ist, einen Aufbau (E5) einer zweiten sicheren Kommunikation mit einem Aktualisierungsserver (21) mit Konformitätsprüfung (E6) eines von dem Aktualisierungsserver übertragenen Public-Key-Zertifikats in Abhängigkeit von einem Referenzzertifikat für den Aktualisierungsserver;
- einen Empfang (E8) eines aktualisierten Referenzzertifikats für den Hauptserver mittels der zweiten sicheren Kommunikation, wobei das aktualisierte Zertifikat dazu bestimmt ist, von der Client-Anwendung bei einem erneuten Aufbau einer sicheren Kommunikation mit dem Hauptserver verwendet zu werden.

2. Verfahren nach Anspruch 1, welches, wenn eine dritte sichere Kommunikation mit dem Hauptserver aufgebaut wurde, einen Empfang eines aktualisierten Referenzzertifikats für den Aktualisierungsserver mittels der dritten sicheren Kommunikation umfasst.

3. Verfahren nach Anspruch 1, wobei das Ablaufdatum des Referenzzertifikats für den Aktualisierungsserver später als dasjenige des Referenzzertifikats für den Hauptserver ist.

4. Verfahren nach Anspruch 1, welches, wenn das empfangene Referenzzertifikat für den Hauptserver mit dem bei der Konformitätsprüfung verwendeten Referenzzertifikat identisch ist, eine Änderung eines dem Kommunikationsnetz zugrunde liegenden Zugangsnetzes umfasst, um einen erneuten Aufbau einer sicheren Kommunikation mit dem Hauptserver zu versuchen.

5. Verfahren nach Anspruch 1, welches, wenn die zweite sichere Kommunikation mit dem Aktualisierungsserver nicht aufgebaut werden kann, eine Änderung eines dem Kommunikationsnetz zugrunde liegenden Zugangsnetzes umfasst, um einen erneuten Aufbau einer sicheren Kommunikation mit dem Hauptserver zu versuchen.

6. Benutzergerät (10), welches eine Client-Anwendung ausführt, umfassend:
- ein Konformitätsprüfungsmodul (16), das dazu eingerichtet ist, die Konformität eines von einem Server übertragenen Public-Key-Zertifikats bei einem Versuch des Aufbaus einer sicheren Kommunikation in Abhängigkeit von einem Referenzzertifikat für den Server zu prüfen, wobei diese Konformitätsprüfung Voraussetzung für einen Aufbau einer sicheren Kommunikation ist;
- ein Anwendungsmodul (17), das einen Dienst implementiert, der auf dem Benutzergerät und einem Hauptserver (20) ausgeführt wird, und eingerichtet zum:
- Steuern eines Aufbaus einer ersten sicheren Kommunikation mit einem Hauptserver mit Konformitätsprüfung eines von dem Hauptserver übertragenen Public-Key-Zertifikats in Abhängigkeit von einem Referenzzertifikat für den Hauptserver,
- Steuern eines Aufbaus einer zweiten sicheren Kommunikation mit einem Aktualisierungsserver mit Konformitätsprüfung eines von dem Aktualisierungsserver übertragenen Public-Key-Zertifikats in Abhängigkeit von einem Referenzzertifikat für den Aktualisierungsserver, wenn die Prüfung ergibt, dass das vom Hauptserver übertragene Public-Key-Zertifikat nicht konform ist, und
- Empfangen eines aktualisierten Referenzzertifikats für den Hauptserver mittels der zweiten sicheren Kommunikation, wobei das aktualisierte Zertifikat dazu bestimmt ist, von der Client-Anwendung bei einem erneuten Aufbau einer sicheren Kommunikation mit dem Hauptserver verwendet zu werden.

7. System (2), welches ein Benutzergerät (10) nach Anspruch 6 und einen Hauptserver (20), der dazu eingerichtet ist, einen Dienst mit dem Benutzergerät zu implementieren, umfasst, wobei das System ferner einen Aktualisierungsserver (21) umfasst, der dazu eingerichtet ist, ein aktualisiertes Referenzzertifikat für den Hauptserver mittels einer mit Konformitätsprüfung aufgebauten sicheren Kommunikation zu senden, wobei das aktualisierte Zertifikat dazu bestimmt ist, von der Client-Anwendung bei einem erneuten Aufbau einer sicheren Kommunikation mit dem Hauptserver verwendet zu werden.

8. Programm für ein Benutzergerät, welches Programmcodeanweisungen umfasst, die dazu bestimmt sind, die Ausführung der Schritte des Verfahrens zur Kommunikation nach einem der Ansprüche 1 bis 5 zu steuern, die von dem Benutzergerät implementiert werden, wenn das Programm von dem Gerät ausgeführt wird.

9. Von einem Benutzergerät lesbares Aufzeichnungsmedium, auf dem das Programm nach Anspruch 8 gespeichert ist.

## Claims

1. Method of communication between a client application implementing a service being executed on a user device (10) and a main server (20), said method comprising, for the client application:
- a verification (E2) of compliance of a public key certificate transmitted by the main server during an attempt to set up (E1) a first secure communication, as a function of a reference certificate for said main server, a setup of secure communication being conditional upon said verification of compliance;
- when said public key certificate transmitted by the main server is not verified compliant, a setup (E5) of a second secure communication with an update server (21) with verification (E6) of compliance of a public key certificate transmitted by the update server, as a function of a reference certificate for said update server;
- a receipt (E8) of an updated reference certificate for said main server by means of the second secure communication, said updated certificate being intended to be used by the client application during a new setup of secure communication with the main server.

2. Method according to Claim 1, comprising, when a third secure communication is set up with the main server, a receipt of an updated reference certificate for said update server by means of the third secure communication.

3. Method according to Claim 1, wherein the expiration date of the reference certificate for the update server is later than that of the reference certificate for the main server.

4. Method according to Claim 1, comprising, when the received reference certificate for the main server is identical to the reference certificate used during the verification of compliance, a modification of an access network underlying the communication network with a view to attempting a new setup of a secure communication with the main server.

5. Method according to Claim 1, comprising, when the second secure communication cannot be set up with the update server, a modification of an access network underlying the communication network with a view to attempting a new setup of a secure communication with the main server.

6. User device (10) executing a client application comprising:
- a module (16) for verification of compliance, which module is arranged to verify the compliance of a public key certificate transmitted by a server during an attempt to set up a secure communication, as a function of a reference certificate for said server, a setup of secure communication being conditional upon said verification of compliance;
- an application module (17) implementing a service being executed on the user device and a main server (20), arranged to:
- order a setup of a first secure communication with a main server with verification of compliance of a public key certificate transmitted by the main server, as a function of a reference certificate for said main server,
- order a setup of a second secure communication with an update server with verification of compliance of a public key certificate transmitted by the update server, as a function of a reference certificate for said update server, when said public key certificate transmitted by the main server is not verified compliant, and
- receive an updated reference certificate for said main server by means of the second secure communication, said updated certificate being intended to be used by the client application during a new setup of secure communication with the main server.

7. System (2) comprising a user device (10) according to Claim 6 and a main server (20) arranged to implement a service with the user device, said system further comprising an update server (21), arranged to send an updated reference certificate for the main server by means of a secure communication set up with verification of compliance, said updated certificate being intended to be used by the client application during a new setup of secure communication with the main server.

8. Program for a user device, comprising program code instructions intended to order the execution of the steps of the communication method according to one of Claims 1 to 5, which steps are implemented by the user device, when said program is executed by said device.

9. Storage medium readable by a user device on which the program according to Claim 8 is stored.
